# EUROPEAN PATENT APPLICATION

(11) **EP 2 586 983 A2**
(43) Date of publication of application: **01.05.2013**
(21) Application number: 12190333.0
(22) Date of filing: 29.10.2012
(51) Int. Cl.: F01D 5/18, F01D 25/12

(54) **Gas turbine component and method of fabricating the same**

(30) Priority: 31.10.2011 US 201113285747
(71) Applicant: General Electric Company, Schenectady, NY 12345 (US)
(72) Inventor: Correia, Victor Hugo Silva, Lynn, MA 01905-2655 (US); Manning, Robert Francis, Lynn, MA 01905-2655 (US)
(74) Representative: Williams, Andrew Richard

(57) **Abstract**

A component for a gas turbine engine (100) is provided. The component includes a cooling aperture (194, 196) and a plug (204) filling at least a portion of the cooling aperture to prevent airflow through the cooling aperture. The plug is configured to melt at a predetermined temperature during operation of the gas turbine engine to permit airflow through the cooling aperture.

## Description

### BACKGROUND OF THE INVENTION

The field of this disclosure relates generally to components and, more particularly, to a component for a gas turbine engine and a method of fabricating the same.

Many known gas turbine engines include a combustion system for mixing fuel with compressed air and igniting the mixture to produce combustion gases. The combustion gases are directed into a turbine system to drive a turbine into rotation, thereby driving a fan, a compressor, and/or a generator rotatably coupled to the turbine. In some gas turbine engines (e.g., propelling gas turbine engines on an aircraft), the combustion gases are exhausted from the turbine system into the ambient air, thereby providing thrust for the aircraft. In some other gas turbine engines (e.g., gas turbine engines in a combined cycle power plant), the combustion gases are directed from the turbine system into a heat recovery steam generator for use in producing steam.

Some known combustion systems include a plurality of circumferentially spaced fuel nozzles that discharge fuel for use in the combustion process. Because these fuel nozzles may discharge fuel at different rates, there can be circumferential areas of higher combustion gas temperatures (i.e., hot streaks) downstream of the combustion system. This can yield a substantial temperature increase to those engine components that encounter the hot streaks. However, since the locations of the hot streaks can be difficult to determine and can vary from engine to engine, at least some known engines have cooling apertures formed on many downstream engine components that do not end up being located within a hot streak and, therefore, do not end up experiencing a temperature increase that warrants cooling. As a result, the downstream engine components not located in the hot streaks have been known to be excessively cooled to temperatures that are lower than desired, and a significant amount of undesirable cooling air has therefore been known to be discharged into the combustion gas flow, which decreases the overall operating efficiency of the engine. It would be useful, therefore, to have a component that discharges cooling air only if located within a hot streak, which would facilitate maintaining the useful life of the engine while improving the overall operating efficiency of the engine.

### BRIEF DESCRIPTION OF THE INVENTION

In one aspect, a component for a gas turbine engine is provided. The component includes a cooling aperture and a plug filling at least a portion of the cooling aperture to prevent airflow through the cooling aperture. The plug is configured to melt at a predetermined temperature during operation of the gas turbine engine to permit airflow through the cooling aperture.

In another aspect, a method of fabricating a component for a gas turbine engine is provided. The method includes forming a cooling aperture in the component and filling at least a portion of the cooling aperture with a plug that prevents airflow through the cooling aperture. The plug is configured to melt at a predetermined temperature during operation of the gas turbine engine to permit airflow through the cooling aperture.

In another aspect, a gas turbine engine is provided. The gas turbine engine includes a combustion system and a turbine system disposed downstream of the combustion system, wherein at least one of the combustion system and the turbine system includes a component. The component has a cooling aperture and a plug filling at least a portion of the cooling aperture to prevent airflow through the cooling aperture. The plug is configured to melt at a predetermined temperature during operation of the gas turbine engine to permit airflow through the cooling aperture.

### BRIEF DESCRIPTION OF THE DRAWINGS

Figure 1 is a schematic illustration of an exemplary gas turbine engine;
Figure 2 is a schematic illustration of a combustion system of the gas turbine engine shown in Figure 1;
Figure 3 is a schematic illustration of a portion of a turbine nozzle of the gas turbine engine shown in Figure 1;
Figure 4 is a perspective view of a segment of the turbine nozzle shown in Figure 3; and
Figure 5 is a schematic sectional illustration of the turbine nozzle segment shown in Figure 4.

### DETAILED DESCRIPTION OF THE INVENTION

The following detailed description sets forth a component and a method of fabricating the same by way of example and not by way of limitation. The description should clearly enable one of ordinary skill in the art to make and use the component, and the description sets forth several embodiments, adaptations, variations, alternatives, and uses of the component, including what is presently believed to be the best mode thereof. The component is described herein as being applied to a preferred embodiment, namely a gas turbine engine. However, it is contemplated that the component and the method of fabricating the same have general applications in a broad range of systems and/or a variety of other commercial, industrial, and/or consumer applications.

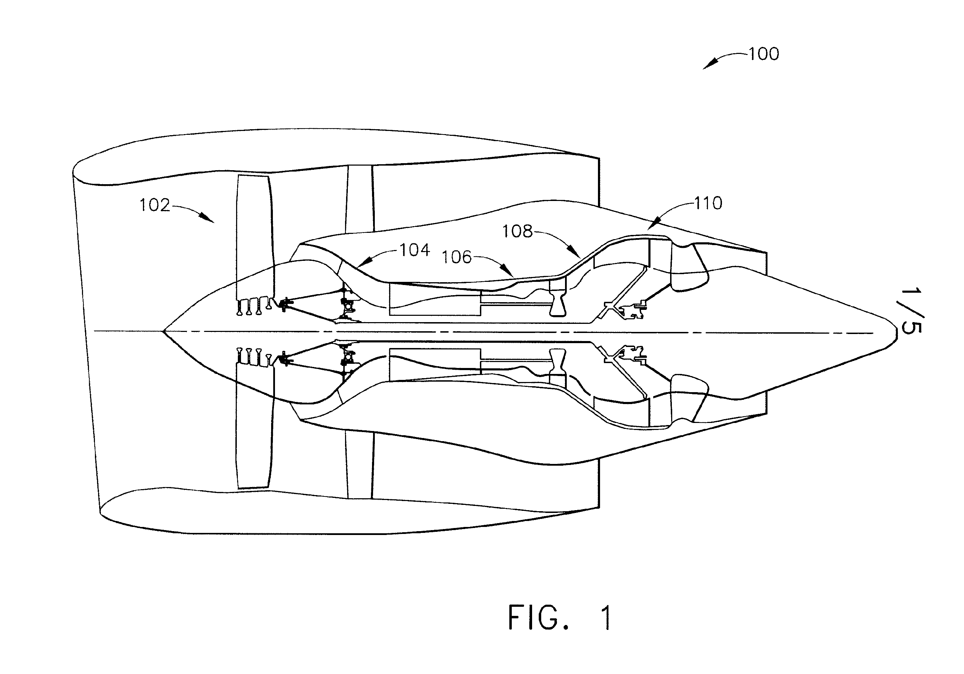

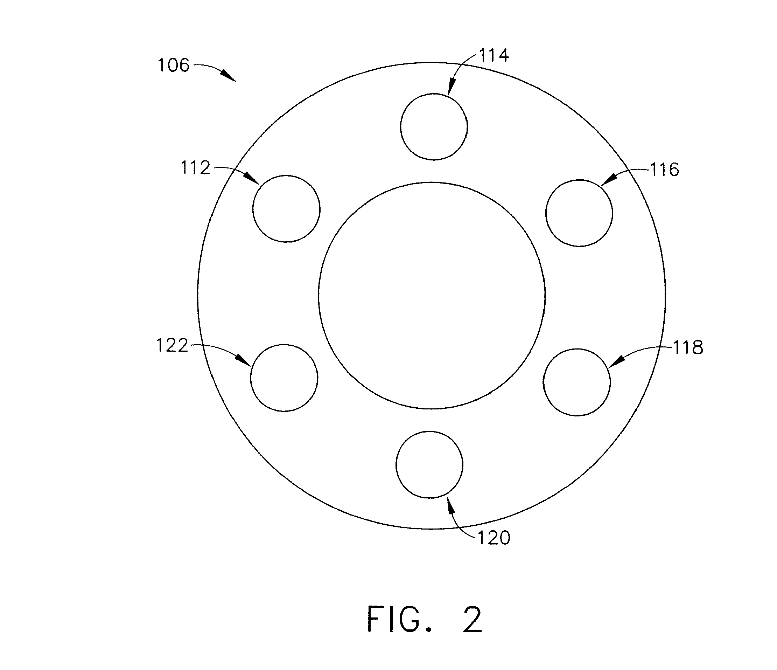

Figure 1 is a schematic illustration of an exemplary gas turbine engine 100 including a fan system 102, a compressor system 104, a combustion system 106, a high pressure turbine system 108, and a low pressure turbine system 110. Figure 2 is a schematic illustration of combustion system 106. In the exemplary embodiment, combustion system 106 includes a plurality of spaced-apart, circumferentially arranged fuel nozzles for discharging fuel during the combustion process, namely combustion system 106 includes a first fuel nozzle 112, a second fuel nozzle 114, a third fuel nozzle 116, a fourth fuel nozzle 118, a fifth fuel nozzle 120, and a sixth fuel nozzle 122. In other embodiments, gas turbine engine 100 may have any suitable number of fuel nozzles arranged in any suitable manner. Alternatively, gas turbine engine 100 may include any suitable number of fan systems, compressor systems, combustion systems, and/or turbine systems configured in any suitable manner.

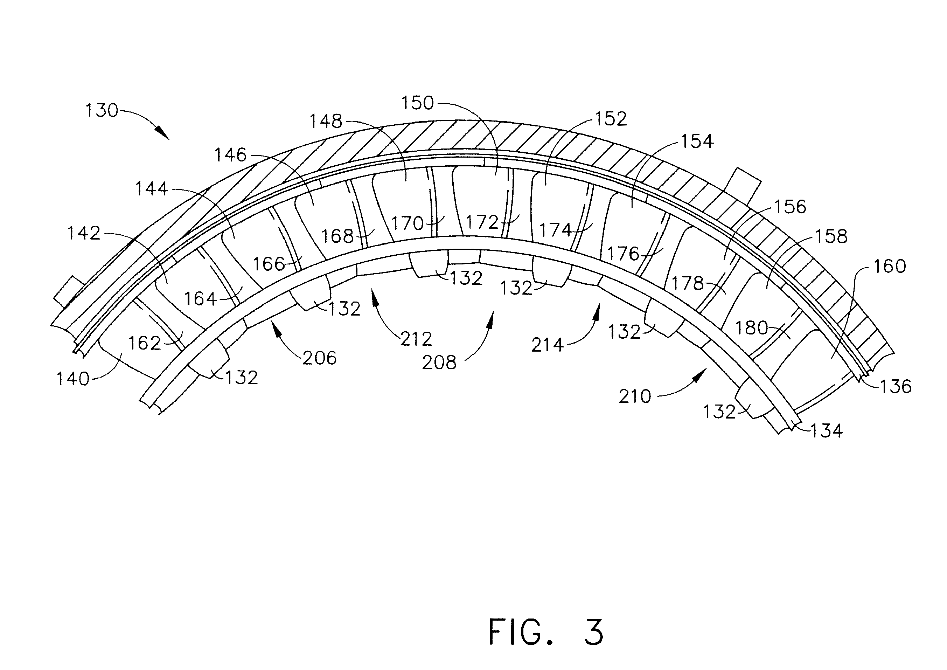

Figure 3 is a schematic illustration of a portion of an annular turbine nozzle 130 of high pressure turbine system 108. In the exemplary embodiment, turbine nozzle 130 is a stage-one nozzle of high pressure turbine system 108. In other embodiments, turbine nozzle 130 may be in any suitable stage of high pressure turbine system 108 or low pressure turbine system 110.

In the exemplary embodiment, turbine nozzle 130 has a plurality of turbine nozzle segments 132 that are circumferentially arranged to form an inner band 134 and an outer band 136, with a row of spaced-apart stator vanes that extend from inner band 134 to outer band 136, namely a first vane 140, a second vane 142, a third vane 144, a fourth vane 146, a fifth vane 148, a sixth vane 150, a seventh vane 152, an eighth vane 154, a ninth vane 156, a tenth vane 158, and an eleventh vane 160. As such, a first flow path 162 is defined between first vane 140 and second vane 142; a second flow path 164 is defined between second vane 142 and third vane 144; a third flow path 166 is defined between third vane 144 and fourth vane 146; a fourth flow path 168 is defined between fourth vane 146 and fifth vane 148; a fifth flow path 170 is defined between fifth vane 148 and sixth vane 150; a sixth flow path 172 is defined between sixth vane 150 and seventh vane 152; a seventh flow path 174 is defined between seventh vane 152 and eighth vane 154; an eighth flow path 176 is defined between eighth vane 154 and ninth vane 156; a ninth flow path 178 is defined between ninth vane 156 and tenth vane 158; and a tenth flow path 180 is defined between tenth vane 158 and eleventh vane 160. In other embodiments, turbine nozzle 130 may have any suitable number of vanes that define any suitable number of flow paths.

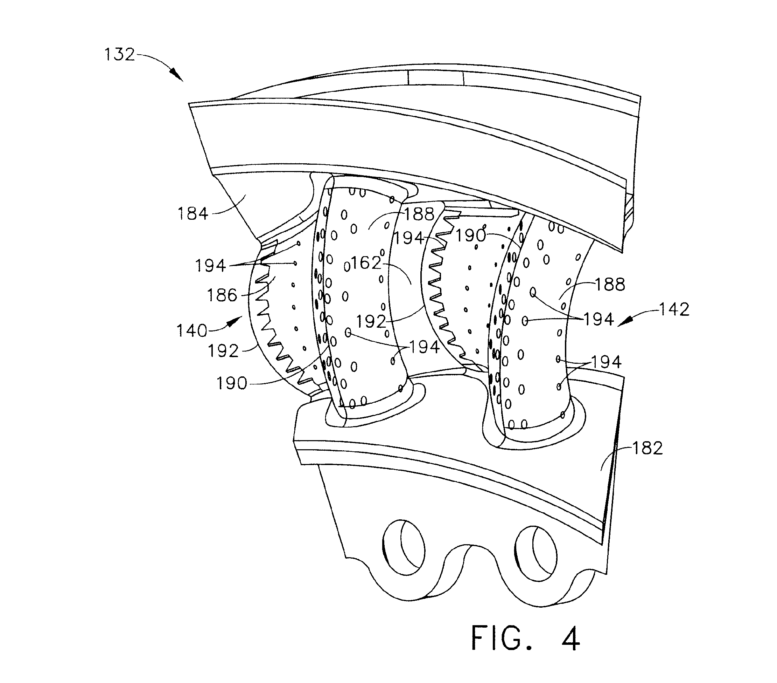

Figure 4 is a perspective view of one turbine nozzle segment 132 of turbine nozzle 130. While the configuration of one exemplary turbine nozzle segment 132 is described in more detail below, any suitable number of turbine nozzle segments 132 of turbine systems 108, 110 may be configured in the same manner. In the exemplary embodiment, turbine nozzle segment 132 includes an inner band segment 182, an outer band segment 184, and a pair of vanes (e.g., first vane 140 and second vane 142) extending from inner band segment 182 to outer band segment 184. In other embodiments, turbine nozzle segment 132 may have any suitable number of vanes extending from inner band segment 182 to outer band segment 184 (e.g., turbine nozzle segment 132 may have a single vane, rather than a pair of vanes). In the exemplary embodiment, each vane 140, 142 has an airfoil shape with a concave pressure side 186 and a convex suction side 188 joined together at a leading edge 190 and a trailing edge 192. Each vane 140, 142 also includes a plurality of cooling apertures 194 disposed on pressure side 186 and suction side 188 proximate leading edge 190, trailing edge 192, and areas therebetween. Alternatively, vanes 140, 142 may have any suitable airfoil shape, and turbine nozzle segment 132 may have any suitable arrangement of cooling apertures 194 (e.g., inner band segment 182 and/or outer band segment 184 may have cooling apertures 194).

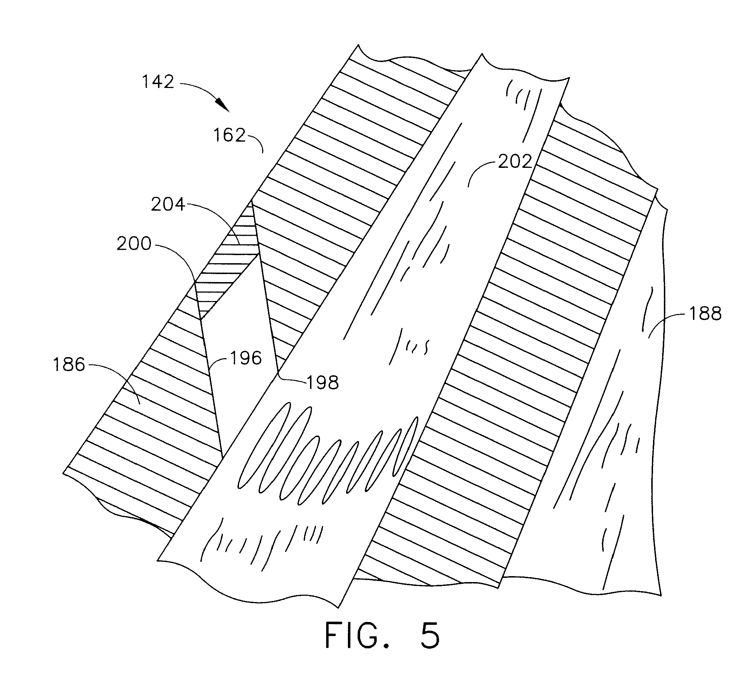

Figure 5 is a sectional view of second vane 142 through a first cooling aperture 196 of cooling apertures 194. While the configuration of first cooling aperture 196 of second vane 142 is described in more detail below, any suitable component of gas turbine engine 100 (e.g., any suitable component of combustion system 106 and/or turbine systems 108, 110, such as any suitable turbine nozzle component, turbine shroud component, and/or turbine blade component of turbine systems 108, 110) may have any suitable number of cooling apertures 194 configured in the same manner as first cooling aperture 196. Along the same lines, cooling apertures 194, 196 may be of any suitable type such as, for example, film cooling apertures, trailing edge cooling apertures, airfoil tip cooling apertures, or platform edge cooling apertures.

In the exemplary embodiment, first cooling aperture 196 extends through concave pressure side 186 of second vane 142 such that first cooling aperture 196 has an inlet 198 and an outlet 200. Inlet 198 is in flow communication with an internal cooling flow passage 202 of second vane 142, and outlet 200 is in flow communication with first flow path 162 of turbine nozzle 130. A plug 204 is disposed within first cooling aperture 196 to prevent airflow through first cooling aperture 196. In the exemplary embodiment, plug 204 is located at outlet 200. In other embodiments, plug 204 may have any suitable location along first cooling aperture 196. In the exemplary embodiment, plug 204 is formed from a hardened material (e.g., a braze alloy, a pure metallic element, etc.) having a predetermined melting temperature. In other embodiments, plug 204 may be formed from any suitable material with a predetermined melting temperature that facilitates enabling plug 204 to function as described herein.

During operation of gas turbine engine 100, airflow through fan system 102 is supplied to compressor system 104, and compressed air is delivered from compressor system 104 to combustion system 106. The compressed air is mixed with fuel from fuel nozzles 112, 114, 116, 118, 120, 122, and the combustion gases flow from combustion system 106 into turbine nozzle 130 of high pressure turbine system 108.

In the exemplary embodiment, because fuel nozzles 112, 114, 116, 118, 120, 122 are circumferentially spaced apart and may discharge fuel at different rates, hotter regions ("hot streaks") may exist in the annular combustion gas flow into turbine nozzle 130, and these hot streaks of combustion gases would likely be circumferentially aligned with fuel nozzles 112, 114, 116, 118, 120, 122. More specifically, as shown in Figure 3, first flow path 162 and second flow path 164 are circumferentially aligned with first fuel nozzle 112 and, therefore, could receive a first hot streak of combustion gases, thereby forming a first hot streak region 206 of turbine nozzle 130. Fifth flow path 170 and sixth flow path 172 are circumferentially aligned with second fuel nozzle 114 and, therefore, could receive a second hot streak of combustion gases, thereby forming a second hot streak region 208 of turbine nozzle 130. Ninth flow path 178 and tenth flow path 180 are circumferentially aligned with third fuel nozzle 116 and, therefore, could receive a third hot streak of combustion gases, thereby forming a third hot streak region 210 of turbine nozzle 130. On the other hand, third flow path 166 and fourth flow path 168 are located circumferentially between first hot streak region 206 and second hot streak region 208 of turbine nozzle 130 and, therefore, are likely to form a first cooler region 212 of turbine nozzle 130, and seventh flow path 174 and eighth flow path 176 are located circumferentially between second hot streak region 208 and third hot streak region 210 of turbine nozzle 130 and, therefore, are likely form a second cooler region 214 of turbine nozzle 130. In this manner, second vane 142 may be completely within first hot streak region 206; fourth vane 146 is likely to be completely within first cooler region 212; sixth vane 150 may be completely within second hot streak region 208; eighth vane 154 is likely to be completely within second cooler region 214; and tenth vane 158 may be completely within third hot streak region 210.

In the exemplary embodiment, the composition of plugs 204 is selected such that that the predetermined melting temperature of plugs 204 is below the anticipated temperature of possible hot streak regions 206, 208, 210 of turbine nozzle 130 such that plugs 204 of second vane 142, sixth vane 150, and tenth vane 158 are configured to melt during operation of gas turbine engine 100 if any of regions 206, 208, 210 end up being hot streak regions (i.e., if any of vanes 142, 150, 158 ends up reaching the predetermined melting temperature), thereby enabling vanes 142, 150, 158 to be cooled via cooling air discharged through outlets 200 thereof. Yet, if any of vanes 142, 150, 158 ends up not being within a hot streak region 206, 208, 210 (i.e., if any of vanes 142, 150, 158 does not end up reaching the predetermined melting temperature), the associated plugs 204 would remain hard enough to prevent cooling airflow through outlets 200 thereof. In this manner, cooling air is discharged from only those vanes that reach a temperature for which cooling is desired. In the exemplary embodiment, all plugs of turbine nozzle 130 are made from the same material (i.e., each vane 140, 142, 144, 146, 148, 150, 152, 154, 156, 158, 160 have plugs 204 with the same predetermined melting temperature). In other embodiments, turbine nozzle 130 may have plugs 204 made from materials having different predetermined melting temperatures.

It should be noted that the locations of hot streak regions can vary from engine to engine, given that each fuel nozzle of each engine may have a different fuel discharge rate. In one example, a first engine and a second engine may have differently located hot streak regions of the stage one nozzle. As a result, a plug of the first engine's stage one nozzle may melt while a plug having the same circumferential location in the second engine's stage one nozzle may not melt. To account for such variation in location, the above described components and methods enable all stage one nozzle cooling apertures to be filled with plugs having a predetermined melting temperature that is below the expected temperature of the hot streak regions. In this manner, without the burden of anticipating the locations of the hot streaks within each engine, cooling air can be discharged from only those engine components that end up experiencing a temperature for which cooling is desirable, while cooling air is not discharged from those engine components for which cooling is not desirable.

Along the same lines, the expected temperatures of hot streak regions can vary from engine to engine, and can even vary within a single engine. To account for such variation in temperature, the composition of the plugs may be chosen from a plurality of different plug compositions having different predetermined melting temperatures to suit the engine's expected operating temperatures (e.g., the composition of the plugs may be chosen from a first composition having a first predetermined melting temperature, a second composition having a second predetermined melting temperature that is higher than the first predetermined melting temperature, and a third composition having a third predetermined melting temperature that is higher than the first predetermined melting temperature and the second predetermined melting temperature). In this manner, components in different engines may be equipped with different plug compositions (e.g., a first stator vane of a first engine's stage one nozzle may have a plug composition that is different than a first stator vane of a second engine's stage one nozzle). Similarly, cooling apertures in different locations in the same engine may be equipped with different plug compositions (e.g., the cooling apertures of a first stator vane in a first engine's stage one nozzle may have a plug composition that is different than the cooling apertures of a second stator vane in the first engine's stage one nozzle such that the first stator vane and the second stator vane experience cooling at different operating temperatures). Additionally, cooling apertures in different locations on the same engine component may be equipped with different plug compositions (e.g., a plurality of first cooling apertures on a first stator vane may have a first plug composition while a plurality of second cooling apertures on the same first stator vane may have a second plug composition such that the first cooling apertures open at a first predetermined temperature and the second cooling apertures open at a second predetermined temperature, thereby providing stepwise cooling of the first stator vane).

The methods and systems described herein facilitate providing a gas turbine engine with cooling apertures for cooling engine components. The methods and systems described herein further facilitate configuring the cooling apertures of the gas turbine engine such that cooling air is provided only to those engine components for which cooling is desired. The methods and systems described herein also facilitate accounting for variation in the locations and temperatures of hot streaks by filling cooling apertures with plugs that are configured to melt only when a predetermined temperature threshold is met, thereby preventing cooler areas of the gas turbine engine from being excessively and undesirably cooled. The methods and systems described herein therefore facilitate maintaining the useful life of the engine by cooling components for which cooling is desired, while improving the overall operating efficiency of the engine by preventing the excessive discharge of cooling air that results from cooling engine components for which cooling is not desired.

Exemplary embodiments of a component and a method of fabricating the same are described above in detail. The methods and systems are not limited to the specific embodiments described herein, but rather, components of the methods and systems may be utilized independently and separately from other components described herein. For example, the methods and systems described herein may have other industrial and/or consumer applications and are not limited to practice with only gas turbine engines as described herein. Rather, the present invention can be implemented and utilized in connection with many other industries.

While the invention has been described in terms of various specific embodiments, those skilled in the art will recognize that the invention can be practiced with modification within the scope of the claims.

## Claims

1. A component (142) for a gas turbine engine (100), said component comprising:
a cooling aperture (194,196); and
a plug (204) filling at least a portion of said cooling aperture (194,196) to prevent airflow through said cooling aperture, wherein said plug (204) is configured to melt at a predetermined temperature during operation of the gas turbine engine (100) to permit airflow through said cooling aperture (194,196).

2. A component (142) in accordance with Claim 1, wherein said component (142) is one of a turbine nozzle component, a turbine shroud component, and a turbine blade component.

3. A component (142) in accordance with either of claim 1 or 2, wherein said cooling aperture (194,196) is one of a film cooling aperture, a trailing edge cooling aperture, an airfoil tip cooling aperture, and a platform edge cooling aperture.

4. A component (142) in accordance with any preceding Claim, wherein said cooling aperture (194,196) comprises an inlet (198) and an outlet (200), said plug (204) disposed at said outlet. (200)

5. A component (142) in accordance with any preceding Claim, wherein said plug (204) is formed from a hardened metallic material.

6. A component (142) in accordance with any preceding Claim, wherein said plug (204) is formed from a hardened braze alloy material.

7. A gas turbine engine (100) comprising:
a combustion system (106); and
a turbine system (108, 110) disposed downstream of said combustion system (106), wherein at least one of said combustion system (106) and said turbine system (108,110) comprises a component (142) according to any of the preceding Claims.

8. A gas turbine engine (100) in accordance with Claim 7, wherein said component is a stator vane (140, 142, 144, 146, 148, 150, 152, 154, 156, 158, 160) comprising a convex suction side (188), a concave pressure side (186), and an internal cooling flow passage (202), said cooling aperture (194,196) extending through one of said convex suction side (188) and said concave pressure side (186) such that said cooling aperture (194,196) is in flow communication with said cooling flow passage (202).

9. A method of fabricating a component (142) for a gas turbine engine (100), said method comprising:
forming a cooling aperture (194,196) in the component (142); and
filling at least a portion of the cooling aperture (194,196) with a plug (204) that prevents airflow through the cooling aperture (194,196), wherein the plug (204) is configured to melt at a predetermined temperature during operation of the gas turbine engine (100) to permit airflow through the cooling aperture (194,196).

10. A method in accordance with Claim 9, wherein said forming a cooling aperture (194,196) in the component (142) comprises forming the cooling aperture (194,196) in one of a turbine nozzle component, a turbine shroud component, and a turbine blade component.

11. A method in accordance with either Claim 9 or 10, wherein said forming a cooling aperture (194,196) in the component (142) comprises forming the cooling aperture (194,196) as one of a film cooling aperture, a trailing edge cooling aperture, an airfoil tip cooling aperture, and a platform edge cooling aperture.

12. A method in accordance with any of Claims 9 to 11, wherein said forming a cooling aperture (194,196) in the component (142) comprises forming the cooling aperture with an inlet (198) and an outlet (200), said filling at least a portion of the cooling aperture (194,196) with a plug (204) comprising locating the plug (204) at the outlet (200).

13. A method in accordance with any of Claims 9 to 12, wherein said filling at least a portion of the cooling aperture (194,196) with a plug (204) comprises filling at least a portion of the cooling aperture (194,196) with a hardened metallic material.

14. A method in accordance with any of Claims 9 to 13, wherein said filling at least a portion of the cooling aperture (194,196) with a plug (204) comprises filling at least a portion of the cooling aperture (194,196) with a hardened braze alloy material.
